(19) Europäisches Patentamt

European Patent Office

Office européen des brevets

(11) Numéro de publication : **0 487 406 A1**

(12) # DEMANDE DE BREVET EUROPEEN

(21) Numéro de dépôt : 91403113.3

(22) Date de dépôt : 19.11.91

(51) Int. Cl.⁵ : **B62D 1/18,** B62D 33/06, F16C 3/03, F16D 3/06

(30) Priorité : 23.11.90 FR 9014656

(43) Date de publication de la demande : 27.05.92 Bulletin 92/22

(84) Etats contractants désignés : BE DE ES GB IT NL SE

(71) Demandeur : **NACAM** Zone Industrielle Sud, Route de Blois F-41100 Vendome (FR)

(72) Inventeur : **Courgeon, Jean-Claude** 17, rue des Quatres Huyes F-44100 Vendome (FR)

(74) Mandataire : **Phélip, Bruno et al** c/o Cabinet Harlé & Phélip 21, rue de La Rochefoucauld F-75009 Paris (FR)

(54) Accouplement extensible perfectionné pour solidariser en rotation deux arbres avec système de sécurité intégré et sonapplication notamment aux directions d'automobiles.

(57) L'invention concerne un accouplement télescopique à deux modes de fonctionnement qui comprend, essentiellement, un élément femelle (11), un élément mâle (12) et un élément intercalaire (13) qui sont réunis par une liaison d'un système coulissant principal qui opère dans un premier mode pour assurer une rotation pratiquement exempte de jeu circonférentiel et aussi par une jonction d'un système coulissant secondaire qui opère dans un second mode pour assurer une rotation avec un jeu circonférentiel donné. Ce système coulissant secondaire assure aussi la sécurité du système coulissant principal dans le cas d'une usure importante de celui-ci en signalant l'usure de ce dernier par l'apparition du jeu circonférentiel dans l'accouplement.

Application par exemple aux directions d'automobiles du type poids lourds à cabines basculantes.

FIG.4a

EP 0 487 406 A1

Jouve, 18, rue Saint-Denis, 75001 PARIS

La présente invention se rapporte aux accouplements extensibles pour solidariser en rotation deux arbres et, notamment, à ceux destinés à être utilisés pour des colonnes de direction d'automobiles.

L'invention a plus particulièrement pour objet un accouplement extensible de ce type qui présente deux modes de fonctionnement, à savoir un premier mode normal de fonctionnement pour lequel le coulissement axial est aisé et la précision de transmission d'une rotation est grande et qui permet un débattement axial avec des oscillations aléatoires tant en fréquence qu'en amplitude et un second mode occasionnel de fonctionnement pour lequel le coulissement axial est indifférent et la précision de transmission d'une rotation relativement grossière et qui permet une élongation axiale supplémentaire stable.

Comme on le sait, notamment en matière automobile, un certain nombre d'entre eux, et plus particulièrement, les véhicules dits de type "poids lourds", sont munis de cabines de conduite basculantes par rapport au châssis, pour faciliter les interventions notamment sur le moteur.

Dans la plupart des cas, l'axe d'articulation de la cabine n'est pas confondu avec l'axe d'articulation de l'un des cardans de la colonne de direction articulée. Ceci implique donc un allongement ou un raccourcissement axial de la longueur de la colonne de direction et impose donc l'utilisation d'un accouplement extensible ou télescopique dans la colonne de direction.

On utilise aussi ce type d'accouplement pour les colonnes de direction de véhicules dotés de systèmes de réglage, notamment axial, de la position du volant et aussi lorsque la cabine est montée sur le châssis par l'intermédiaire d'un système de suspension. Ceci implique une possibilité de modification de la longueur axiale d'au moins une partie de la colonne de direction. Dans le premier cas, alors que le véhicule est à l'arrêt, le conducteur adapte la position du volant dans l'habitacle à la géométrie de ce dernier et à sa morphologie propre ainsi qu'à son style de conduite pour rendre celle-ci agréable et confortable; un tel réglage est occasionnel. Dans le second cas, alors que le véhicule est en circulation et le conducteur à son poste de pilotage, la cabine se déplace relativement au châssis et le volant, éventuellement une fois sa position réglée comme rappelé précédemment, suit les débattements de la cabine par rapport au châssis et subit donc des oscillations aléatoires, tant en fréquence qu'en amplitude, qui modifient la longueur axiale de la colonne de direction en fonction des aléas des conditions de circulation: ce débattement est quasi permanent au fil de la circulation.

Le but de l'invention est de construire un accouplement extensible à deux modes de fonctionnement pour solidariser en rotation deux arbres et plus particulièrement, vise son application aux cas des colonne de direction d'automobiles.

L'accouplement suivant l'invention, qui permet des débattements pour une modification de sa longueur axiale que ce soit par exemple pour le réglage de la position d'un volant ou pour le suivi de mouvements dûs à la suspension de la cabine, alors que l'un des axes de basculement de la colonne est différent de celui de la cabine, permet aussi d'obtenir une élongation axiale supplémentaire afin d'atteindre une longueur étirée maximale très importante par rapport à sa longueur minimale et cela tout en conservant l'orientation circonférentielle relative des constituants de l'accouplement et, plus particulièrement, des deux arbres qu'il réunit.

L'invention a pour objet un accouplement extensible à deux modes de fonctionnement pour solidariser en rotation deux arbres pouvant coulisser suivant un axe qui comprend, entre autres, un élément femelle avec une partie creuse qui présente une paroi intérieure à profil à section droite non-circulaire et qui est destiné à être relié à l'un de ces arbres, un élément mâle avec une partie creuse qui présente, d'une part, une paroi extérieure avec un profil à section droite non-circulaire complémentaire du profil à section droite non- circirlaire de la paroi intérieure de l'élément femelle et, d'autre part une paroi intérieure avec une géométrie à section droite non-circulaire et qui est destiné à être relié à l'autre de ces arbres et un élément intercalaire avec une extrémité qui présente une paroi extérieure avec un profil à section droite non-circulaire complémentaire du profil à section droite non circulaire de la paroi intérieure de l'élément femelle et une autre extrémité qui présente une paroi extérieure avec une géométrie à section droite non-circulaire destinée à coopérer avec la géométrie à section droite non circulaire de la paroi intérieure de l'élément mâle, et où l'élément mâle est engagé dans l'élément femelle de manière que les parois avec leurs profils complémentaires puissent coulisser facilement axialement et sans jeu circonférentiel afin de constituer une liaison d'un système coulissant principal qui opère dans un premier mode de fonctionnement normal et où l'élément intercalaire est engagé à la fois dans l'élément femelle et dans l'élément mâle de manière, d'une part, que leurs parois propres soient au contact et le profil de la paroi intérieure de l'élément femelle avec le profil complémentaire de la paroi extérieure de l'extrémité de l'élément intercalaire assurent un coulissement axial et sans jeu circonférentiel et d'autre part, que la géométrie de la paroi intérieure de l'élément mâle avec la géométrie de la paroi extérieure de l'autre des extrémités de l'élément intercalaire assurent un coulissement axial et avec un jeu circonférentiel afin de constituer une jonction d'un système coulissant secondaire qui opère dans un second mode de fonctionnement occasionnel.

L'invention a aussi pour objet l'application d'un tel accouplement notamment aux directions d'automobile.

D'autres caractéristiques de l'invention apparaîtront à la lecture de la description et des revendications qui suivent ainsi qu'à l'examen du dessin annexé, donné seulement à titre d'exemple, où:

– la Figure 1 est une vue schématique d'une cabine basculante et suspendue d'un véhicule "poids lourds" dont la colonne de direction est équipée d'un accouplement selon l'invention;

– les Figures 2a, 2b et 2c sont des vues en coupe méridienne schématique d'un mode de réalisation d'un accouplement selon l'invention respectivement illustré dans les positions qu'il occupe lorsqu'il est totalement comprimé, lorsqu'il est étendu à son débattement maximal dans son premier mode de fonctionnement et lorsqu'il est à son extension maximale totalement déployé dans son second mode de fonctionnement;

– la Figure 3 est une vue de détail, partielle perspective schématique du mode de réalisation représenté sur la Figure 2;

– les Figures 4a, 4b et 4c sont des vues qui correspondent, respectivement, à celles de la Figure 2 illustrant d'autres détails de l'accouplement selon l'invention;

– la Figure 5 est une vue perspective de détail d'une autre particularité d'un accouplement selon l'invention; et

– les Figures 6a, 6b et 6c sont des vues en section droite illustrant le comportement d'un accouplement selon l'invention avec différents états d'usure.

Les accouplements extensibles, télescopiques pour solidariser en rotation deux arbres, et tout spécialement ceux destinés aux directions de véhicules automobiles étant bien connus dans la technique, on ne décrira dans ce qui suit que ce qui concerne, directement ou indirectement, l'invention. Pour le surplus, le spécialiste de la technique considérée puisera dans les solutions classiques courantes à sa disposition pour faire face aux problèmes particuliers auxquels il est confronté.

Par la suite, on utilise toujours un même numéro de référence pour désigner un constituant homologue, quel que soit le mode de réalisation particulier.

La description qui suit concerne plus spécialement un accouplement selon l'invention dans son application spécifique à une colonne de direction d'automobile type "poids lourds". Mais il est clair que cet accouplement n'est pas limité à une telle utilisation. Cette application particulière n'a pour seul but que de mieux faire comprendre sa structure et son fonctionnement.

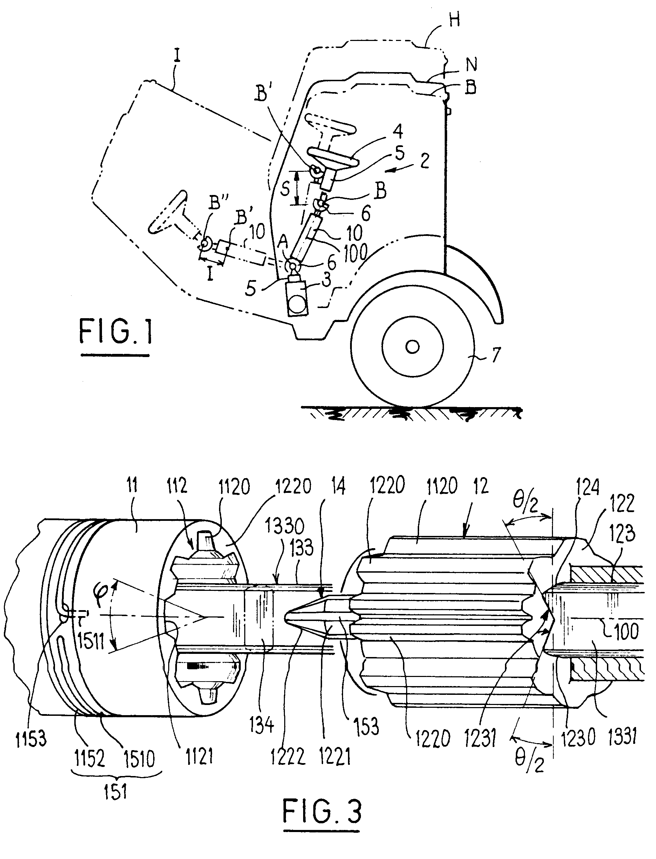

On se reportera d'abord à la Figure 1. On y voit qu'une cabine 1 d'un véhicule "poids lourds" est équipée d'une colonne de direction 2 qui comprend notamment un boîtier 3, un volant 4, des arbres 5, inférieur et supérieur respectivement, ainsi que des articulations 6, inférieure et supérieure; ces articulations sont par exemple des cardans A et B respectivement. Cette colonne de direction 2 est destinée à manoeuvrer un train de roues avant 7.

Sur cette figure, la cabine en question est représentée en trait continu N dans la position qu'elle occupe normalement. Cette cabine est représentée en trait mixte gras H et B dans la position qu'elle occupe lorsque son système de suspension opère et qu'elle est à l'élongation maximale ou minimale de ses débattements, respectivement. Cette cabine est aussi représentée en trait mixte fin I dans la position qu'elle occupe lorsqu'on l'a basculée pour assurer des interventions, par exemple, sur le groupe moteur.

Comme on le voit, cette colonne de direction est équipée d'un accouplement 10 d'axe 100 suivant l'invention.

En position normale de la cabine, du fait des aléas de la voie de circulation, le volant subit des oscillations, pratiquement verticales, aléatoires tant en fréquence qu'en amplitude. On comprend donc que l'articulation inférieure A, elle, reste fixe alors que l'articulation supérieure B peut osciller entre les positions B et B' du fait du fonctionnement de son système de suspension classique et pour cela non illustré. La course maximale de tel débattement est par exemple désignée par la référence S. Ceci correspond au premier mode de fonctionnement normal de l'accouplement selon l'invention.

Lorsque la cabine est basculée, on voit que l'articulation inférieure A reste toujours fixe mais que l'articulation supérieure B est passée de la position B' à une autre position B" qui correspond à une course additionnelle de valeur I. Ceci correspond au second mode de fonctionnement occasionnel de l'accouplement suivant l'invention.

Lorsque la cabine est basculée, l'effort de coulissement pour obtenir le déploiement maximal et la précision pour la transmission angulaire de la rotation entre les arbres de cet accouplement en mode de fonctionnement occasionnel sont sans importance et ne sont pas critiques contrairement à ce qui se passe lorsque l'accouplement est dans son mode de fonctionnement normal où il y va de la sécurité de la conduite aussi bien quant à la facilité des débattements aléatoires axiaux que quant à la précision de la transmission angulaire de la rotation, comme il est aisé de le comprendre.

Pour la facilité de la description, on exposera successivement la structure des constituants d'un accouplement selon l'invention avant d'en décrire le fonctionnement.

Comme on le voit en se reportant aux diverses figures du dessin, un accouplement 10 selon l'invention est susceptible d'avoir une longueur variable, mesurée suivant son axe 100. Cet accouplement comprend essentiellement, entre autres, un élément femelle 11, un élément mâle 12 et un élément intercalaire 13.

L'élément femelle 11 comprend une partie creuse avec une paroi 111 intérieure qui présente un profil 112 à section droite non circulaire. L'extrémité libre de cette partie creuse se termine par une tranche 110 ouverte; l'autre extrémité est destinée à être raccordée à un arbre, par exemple par un cardan comme dessiné.

L'élément mâle 12 comprend une partie creuse qui possède, d'une part, une paroi 121 extérieure avec un profil 122 à section droite non-circulaire. Ce profil 122 est complémentaire du profil 112, de la paroi intérieure 111 de l'élément femelle 11. Cette partie creuse de l'élément mâle 12 possède d'autre part une paroi 123 intérieure avec une géométrie 124 à section droite non circulaire.

L'élément 13 intercalaire présente une première extrémité par exemple en forme d'embout qui présente une paroi extérieure 131 avec un profil 132 à section droite non circulaire qui est complémentaire du profil 112 de la paroi intérieure 111 de l'élément femelle 11. Cet élément intercalaire 13 présente une autre extrémité par exemple en forme de queue avec une paroi extérieure 133 qui possède une géométrie 134 à section droite non-circulaire et destinée à coopérer avec la géométrie 124 de la paroi intérieure 123 de l'élément mâle 12.

Comme on peut l'observer, les profils 112 et 122 complémentaires, respectivement de l'élément femelle 11 et de l'élément mâle 12, sont par exemple des cannelures formées d'une succession de creux 1120 et de dents 1220 qui sont engagés les uns dans les autres de manière à pouvoir coulisser relativement selon l'axe 100 pratiquement sans effort et de manière à pouvoir tourner solidairement suivant l'axe 100 pratiquement sans jeu circonférentiel. On observera qu'il en est exactement de même pour le profil 112 de l'élément femelle 111 et du profil 132 de l'élément intercalaire 13, le profil 132 étant lui aussi fait de cannelures.

Comme on peut l'observer, les géométries 124 et 134 destinées à coopérer, respectivement de l'élément mâle 12 et de l'élément intercalaire 13, sont constituées par exemple d'un alésage 1230 de l'élément mâle 12 et d'une queue 1330 de l'élément intercalaire 13. L'alésage 1230 présente au moins un redent fait de facettes 1231 en dièdre et la queue 1330 présente au moins un méplat 1331. Comme on peut le comprendre lorsque cette queue est engagée dans l'alésage, ils peuvent se déplacer relativement l'un à l'autre a la fois par translation axiale et par rotation circonférentielle avec un jeu circonférentiel donné de valeur angulaire θ.

Ce jeu circonférentiel donné angulaire résulte du contact de l'une des facettes 1231 avec le méplat 1331. De préférence, cette organisation est diamétralement symétrique comme illustré.

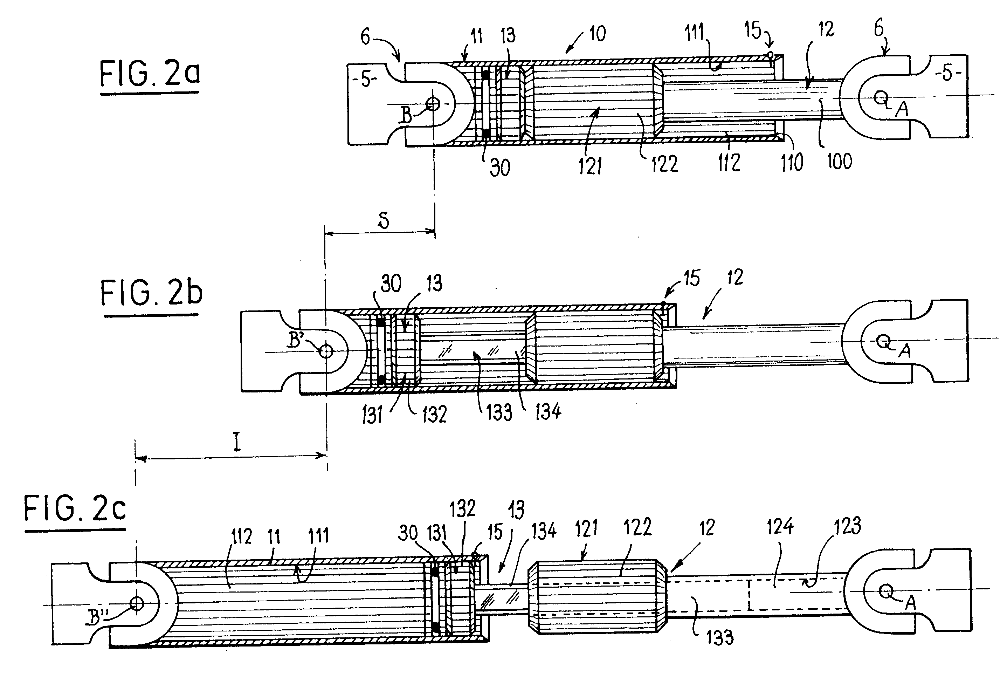

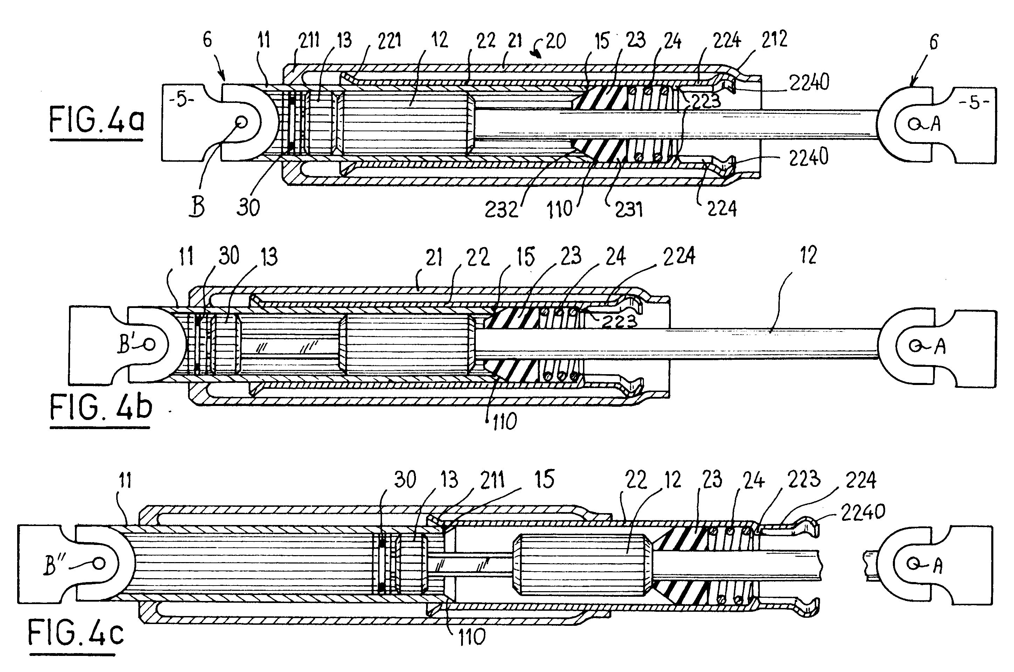

Comme cela apparaît notamment de l'examen des diverses vues des Figures 2 et 4, on voit que l'élément mâle 12 est engagé dans l'élément femelle 11

de manière que les creux et les dents des cannelures que constituent les profils complémentaires 112 et 122 ménagés respectivement sur les parois intérieure 111 et extérieure 121 puissent coulisser axialement sans jeu circonférentiel. Ceci constitue une liaison d'un système principal qui n'opère pratiquement que pendant le premier mode de fonctionnement normal. On voit aussi que l'élément intercalaire 13 est engagé à la fois dans l'élément femelle 11 et dans l'élément mâle 12. Ceci se fait de manière que, d'une part, les creux et les dents des cannelures des profils complémentaires 112 et 132 portés respectivement par la paroi intérieure 111 de l'élément femelle 11 et par la paroi extérieure 131 de l'élément intercalaire 13 puissent coulisser axialement sans jeu circonférentiel et que, d'autre part, les géométries 124 et 134 propres à l'alésage 1230 et à la queue 1330 de l'élément mâle 12 et de l'élément intercalaire 13 engagés l'un dans l'autre, puissent coopérer, et pour les raisons exposées précédemment, puissent coulisser axialement, mais cette fois-ci avec un jeu circonférentiel θ. Ceci constitue une jonction d'un système coulissant secondaire qui n'opère pratiquement que pendant le second mode de fonctionnement occasionnel.

Pour faciliter l'assemblage, et en particulier l'engagement de l'élément mâle 12 dans l'élément femelle 11, de préférence on munit l'accouplement suivant l'invention aussi d'un orienteur 14.

Cet orienteur est, par exemple, fait au moins d'un bec 1221 avec des chanfreins 1222; ce bec prolonge l'une des dents 1220 que porte l'élément mâle 12 comme cela ressort particulièrement bien de l'examen de la Figure 3. Cet orienteur est fait aussi au moins d'un creux élargi 1121 dont la valeur angulaire de l'arc φ est au moins égale à la valeur de l'anale θ. De préférence, on utilise deux crans élargis diamétralement opposés pour des raisons de commodité de fabrication.

L'accouplement selon l'invention comprend aussi de préférence un arrêtoir 15 pour empêcher les éléments femelle 11 et intercalaire 13 de se désolidariser lorsque l'accouplement est dans son second mode de fonctionnement où il est à son extension maximale.

Cet arrêtoir 15 est fait notamment d'une butée 151 portée par l'élément femelle 11. Ceci ressort en particulier de l'examen des vues des Figures 2 et 3. Comme on peut l'y observer, la butée 151 comprend un jonc 1510 élastique avec un doigt 1511. Cette butée comprend aussi une gorge 1152 ménagée à la périphérie de l'élément femelle 11. Cette gorge est transpercée d'un trou 1153 radial qui est destiné à permettre d'y engager le doigt 1511 de manière à ce que ce dernier fasse saillie à l'intérieur de l'élément femelle 11 afin de pouvoir intercepter la trajectoire de translation de l'élément intercalaire 13 avant que ce dernier soit totalement sorti de l'ensemble femelle 11. Ce doigt est destiné à rencontrer de préférence la partie de l'embout qui est proche de la queue de l'élément intercalaire comme cela résulte de l'examen de la Figure 2C notamment. Une rainure 153 est ménagée dans l'élément mâle 12 et, de préférence, creusée dans le bec 1221 ; ceci permet un déplacement axial relatif des éléments mâle et femelle 11 lorsque l'accouplement opère selon son second mode de fonctionnement, comme dessiné en particulier sur la Figure 3.

L'accouplement suivant l'invention comprend aussi de préférence un joint 20 escamotable pour assurer l'étanchéité entre l'élément femelle 11 et l'élément mâle 12.

Ce joint d'étanchéité comprend une gaine 21 avec un bout 211 fixé à l'extérieur de l'élément femelle 11 et avec un rétreint 212 annulaire conique. Ce joint comprend aussi un fourreau 22 logé au moins partiellement entre l'élément femelle 11 et la gaine 21. Ce fourreau 22 présente à une extrémité une couronne 221 extérieure, et au voisinage de son autre extrémité au moins une patte 223 radiale centripète et au moins une languette 224 axiale élastique avec une rampe 2240 terminale. De préférence, on utilise une série de pattes et une série de languettes régulièrement réparties et intercalées alternativement selon une circonférence comme illustré. Ce joint comprend encore une garniture 23 circulaire logée partiellement au moins entre l'élément mâle 12 et le fourreau 22. Cette garniture 23 présente un appui 231 relativement plan et un flanc 232 conique comme cela apparaît notamment sur les diverses vues de la Figure 4. Ce joint comprend de plus un ressort 24 logé entre l'élément mâle 12 et le fourreau 22 de manière à reposer, d'une part, contre l'appui 231 relativement plan et, d'autre part, contre la patte 223. Comme cela ressort les diverses vues de la Figure 4, ces constituants du joint 20 escamotable sont montés et assemblés de manière que le fourreau 22 puisse coulisser axialement entre l'élément femelle 11 et la gaine 21, entre une position escamotée qui correspond au premier mode de fonctionnement normal et une position déployée qui correspond au second mode de fonctionnement occasionnel de l'accouplement selon l'invention. Comme on peut le voir, le rétreint 212 coopère avec les rampes 2240 des languettes 224 pour permettre le passage de l'une à l'autre des deux positions déployée ou escamotée. On observera aussi que la garniture 23 peut coulisser axialement sur l'élément mâle 12 et que le ressort 24 tend à éloigner cette garniture des pattes 223 afin d'obtenir un contact entre la tranche 110 de l'élément femelle 11 et le flanc 232 de la garniture 23.

On notera que les débattements sont limités mécaniquement quel que soit le mode de fonctionnement. De plus un jeu fonctionnel entre le rétreint 212 et la couronne 221 permet d'absorber les dispersions dimensionnelles.

L'accouplement selon l'invention comprend aussi de préférence une sécurité 30 pour assurer la continuité de la transmission d'une rotation, d'un couple entre les éléments femelle 11 et mâle 12 en cas de défaillance de la liaison qu' assurent les profils complémentaires 112 et 122, respectivement de l'élément femelle 11 et de l'élément mâle 12.

On reviendra par la suite sur cette sécurité. Il y a lieu de noter pour l'instant que cette sécurité 30 comprend un frein 31 interposé entre l'élément femelle 11 et l'élément intercalaire 13 pour normalement retenir celui-ci axialement immobilisé dans celui-là lorsque l'accouplement selon l'invention est dans son mode de fonctionnement normal.

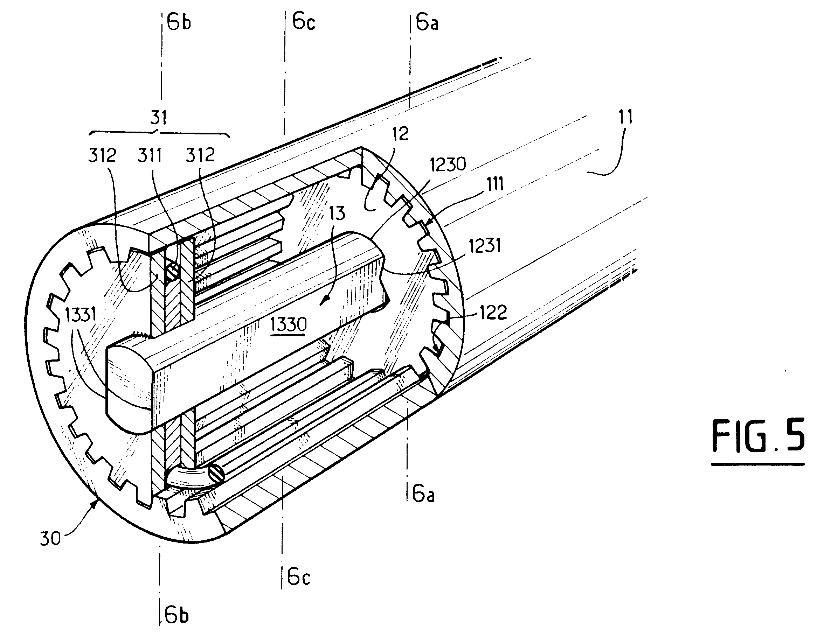

Le frein 31 comprend un patin 311 par exemple torique placé entre deux disques 312 de préférence cannelés qui sont fixés suer la queue 1330 de l'élément intercalaire 13 de manière que le patin 311 puisse prendre appui sur la paroi intérieure 111 de l'élément femelle 11. Ceci ressort notamment de l'examen de la Figure 5.

On voit donc que grâce à l'accouplement selon l'invention, lorsque la cabine occupe sa position normale apte à la conduite, quelle que soit la situation verticale de la cabine qui oscille du fait du fonctionnement de son système de suspension, la transmission du couple du volant au boîtier de direction peut se faire sans entrave par suite du coulissement axial aisé et sans perte de précision dans la transmission de la rotation, du couple par les cannelures qui constituent une liaison sans jeu circonférentiel. Lorsque la cabine est basculée temporairement pour des interventions, on voit que l'on peut toujours transmettre une rotation, un couple aux roues du train avant du véhicule mais cette fois-ci avec une jonction qui autorise un jeu circonférentiel; dans cette situation, la précision de la transmission de la rotation n'a aucune importance de même que le coulissement axial.

De ce qui précède, on voit donc que l'accouplement suivant l'invention comprend d'une part un système coulissant principal, constitué essentiellement par l'élément femelle 11 et l'élément mâle 12, formant une liaison qui permet un coulissement axial facile et une transmission de rotation pratiquement sans jeu, et d'autre part, un système coulissant secondaire constitué lui par l'élément mâle 12, l'élément intercalaire 13 et l'élément femelle 11, formant une jonction qui autorise un coulissement axial avec un effort qui peut être plus grand et une transmission de rotation avec un jeu radial.

Comme on le saisira par la suite, la présence de la sécurité fait que le système coulissant secondaire peut toutefois transmettre une rotation, un couple mais avec un jeu suffisamment important qui signale, en principe, au conducteur une anomalie et plus particulièrement une usure de la colonne de direction, lorsque l'accouplement selon l'invention est dans son premier mode de fonctionnement.

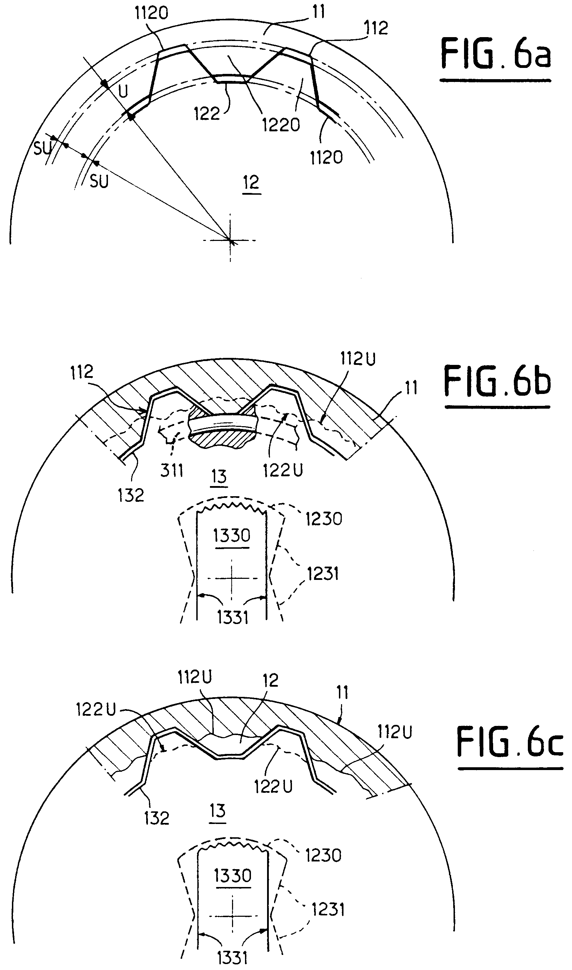

La manière dont se manifeste l'usure d'un accouplement selon l'invention ressort en particulier de l'examen des diverses sections droites de la Figure 6.

La vue de la Figure 6a est une section droite suivant le plan 6a de la Figure 5. Elle illustre l'état d'un accouplement neuf pour lequel les zones d'usure sont indiquées par la lettre U et les zones sans usure par les lettres SU.

La vue de la Figure 6b est une section droite suivant le plan 6b de la Figure 5. Les numéros de référence affectés de la lettre U désignent les profils usés.

La vue de la Figure 6c est une section droite suivant le plan 6c de la Figure 5 analogue à celle de la Figure 6b mais en supposant que la sécurité 30 y est placée.

Comme cela a été rappelé auparavant, l'accouplement extensible suivant l'invention opère selon deux modes de fonctionnement qui résultent de l'existence d'un système coulissant principal qui doit assurer la sécurité et la précision de la direction du véhicule et d'un système coulissant secondaire qui doit permettre l'ouverture de la cabine et, éventuellement, autoriser le changement d'orientation des roues du train avant. Pendant la longévité de l'accouplement selon l'invention, on peut approximativement indiquer que le système coulissant principal opèrera à 95% alors que le système coulissant secondaire n'opèrera que pour le reste, soit 5%. Dans de telles situations, le système coulissant principal est sollicité quelquefois et de façon anormale par des efforts et des frottements importants d'où il résulte des usures notables, et par suite, l'apparition de jeux de plus en plus importants jusqu'à la possibilité de ne plus transmettre une rotation. Au contraire, le système coulissant secondaire est beaucoup moins sollicité du fait de l'existence d'un jeu circonférentiel important initial, comme indiqué, les frottements sont donc beaucoup moindres et par conséquent l'usure qui en résulte. C'est pourquoi pour tirer parti de ceci, l'accouplement selon l'invention comprend une sécurité 30 qui incorpore un frein 31 de manière à créer un frottement axial entre l'élément femelle 11 et l'élément intercalaire 13. Grâce à l'existence de cette sécurité, on comprend que le système coulissant secondaire reste immobilisé axialement, en position haute par rapport à l'élément femelle 11 lorsque la cabine se trouve à son élongation minimale (B') du fait de ses débattements autorisés par le système de suspension. Grâce à ceci, le système coulissant secondaire ne subit aucune usure par frottement en rotation lorsque la cabine est dans sa position normale de conduite c'est-à-dire que l'accouplement selon l'invention opère suivant son mode de fonctionnement normal. Grâce à la sécurité que comprend l'accouplement selon l'invention, on voit que dans la pire des situations, c'est-à-dire lorsque le système coulissant principal est détérioré, la sécurité de la colonne de direction est assurée par le système coulissant secondaire qui permet une transmission de rotation avec jeu tout en signalant au conducteur du véhicule une détérioration de la direction par l'apparition de ce jeu circonférentiel important, par exemple de l'ordre de 15°, qu'il ressentira dans son volant.

Comme on le comprend, la sécurité de l'accouplement selon l'invention opère pour les deux modes de fonctionnement. Pour le premier mode de fonctionnement on met à contribution le profil 112 non-circulaire de la paroi intérieure 111 de l'élément femelle 11, et plus particulièrement la partie supérieure de celui-ci qui n'est pratiquement jamais sollicitée, et avec laquelle le profil 132 complémentaire de l'élément intercalaire 13, qui n'est pas usé et qui ne s'use pas pour les raisons que l'on vient d'indiquer, est en prise et assure la transmission du couple. Pour le deuxième mode de fonctionnement, dans le cas possible où l'élément intercalaire 13 ne resterait pas en contact avec le profil U (Fig 6a) non usé de l'élément femelle 11, on met à contribution le fond des cannelures SU (Fig 6a) qui restent du profil 112 de la paroi intérieure 111 de l'élément femelle 11, et dans lesquelles les cannelures complémentaires de l'élément intercalaire 13 non usées sont au contact pour assurer la transmission de la rotation du couple. On notera que le diamètre extérieur des cannelures à l'état neuf de l'élément mâle 12 est inférieur au diamètre extérieur des cannelures complémentaires.

Comme on l'a indiqué, l'accouplement selon l'invention comprend aussi un orienteur 14. Celui-ci est nécessaire pour faciliter l'assemblage de l'élément femelle 11 et de l'élément mâle 12 puisque ces deux derniers bénéficient d'un jeu circonférentiel θ de l'ordre de 15°. Pour permettre l'engagement de l'élément mâle 12 porté par l'élément intercalaire 13 dans l'élément femelle 11 du fait de l'existence de ce jeu, on ménage comme on l'a indiqué deux creux élargis 1121 diamétralement opposés plus importants dans lesquels sont destinés à venir en prise au moins un bec 1221 chanfreiné. Ceci permet aussi l'engagement et le fonctionnement de l'arrêtoir 15 dont il a été question au préalable du fait de la présence de la rainure 153.

Pour que l'accouplement suivant l'invention puisse opérer normalement, il est nécessaire d'assurer l'étanchéité entre ses différents constituants afin que des corps étrangers ne viennent pas perturber son fonctionnement. Comme on l'a indiqué, ce joint comprend des parties encliquetables et un ressort qui contribue à assurer l'étanchéité en maintenant au contact le flanc conique 232 de la garniture 23 et la tranche 110 de l'élément femelle 11. Le basculement de la cabine, dans un sens ou l'autre, provoque l'ouverture ou la fermeture de l'accouplement. En se reportant aux diverses vues de la Figure 4, on voit que la graine 21 est solidaire de l'élément femelle 11 et peut retenir axialement le fourreau 22 monté entre gaine et élément femelle. Le ressort 24 permet d'obtenir un contact permanent entre la garniture 23 et la tranche 110 de l'élément femelle 11 lorsque la cabine occupe sa position normale de conduite et l'accouplement selon l'invention opère selon son premier mode de fonctionnement. Lorsqu'on bascule la cabine pour placer l'accouplement selon l'invention dans son second mode de fonctionnement, la gaine 21 resserre les languettes 224 du fourreau 22, le retreint 212 pressant sur les rampes 2240, et coulisse ensuite sur ce fourreau jusqu'à l'ouverture totale. Le fourreau 22 se déplace lui-même un peu vers le bas jusqu'à ce que le ressort 24 se soit totalement détendu ou du fait de la position verticale, en début de phase d'ouverture de la cabine. Le fourreau 22 peut toutefois se déplacer sur la gaine 21 sans nuire à l'étanchéité de l'accouplement. Et inversement. En pratique, toutefois, le fourreau 22 a tendance à demeurer dans la position où il est illustré sur la Fig 4c du fait du frottement existant entre la garniture 23, le fourreau 22 et l'élément mâle 12.

On comprend donc tout l'intérêt et tous les avantages de l'accouplement selon l'invention qui permet notamment pratiquement un doublement des aptitudes à l'élongation entre la position la plus contractée et la position la plus étendue par rapport à celles permises par les solutions connues et qui permet aussi de signaler un état d'usure qui pourrait nuire à la sécurité du fait de la dégradation de la précision de la transmission d'une rotation.

## Revendications

1 - Accouplement extensible à deux modes de fonctionnement pour solidariser en rotation deux arbres pouvant coulisser suivant un axe, caractérisé en ce qu'il comprend, entre autres, un élément femelle (11) avec une partie creuse qui présente une paroi intérieure (111) avac un profil (112) à section droite non-circulaire et qui est destiné à être relié à l'un de ces arbres, un élément mâle (12) avec une partie creuse qui présente, d'une part, une paroi extérieure (121) avec un profil (122) à section droite non circulaire complémentaire du profil (112) de la paroi intérieure (111) de l'élément femelle (11), et d'autre part, une paroi intérieure (123) avec une géométrie (124) à section droite non-circulaire et qui est destiné à être relié à l'autre de ces arbres, et un élément intercalaire (13) avec une extrémité qui présente une paroi extérieure (131) avec un profil (132) à section droite non-circulaire complémentaire du profil (112) de la paroi intérieure (111) de l'élément femelle (11) et avec une autre extrémité qui présente une paroi extérieure (133) avec une géométrie (134) à section droite non-circulaire destinée à coopérer avec la géométrie (124) de la paroi intérieure (123) de l'élément mâle (12), et caractérisé en ce que l'élément mâle (12) est engagé dans l'élément femelle (11) de manière que les paroi extérieure (121) et paroi intérieure (111) puissent coulisser facilement axialement et sans jeu circonférentiel afin de constituer une liaison d'un système coulissant principal qui opère dans un premier mode de fonctionnement normal et en ce que l'élément intercalaire (13) est engagé simultanément dans l'élément femelle (11) et l'élément mâle (12) de manière que, d'une part, les paroi extérieure (131) et paroi intérieure (111) soient au contact et les profils complémentaires (132 et 122) assurent un coulissement axial et sans jeu circonférentiel et d'autre part les paroi extérieure (133) et paroi intérieure (123) soient au contact et les géométries (134 et 124) qui coopèrent assurent un coulissement axial et avec un jeu circonférentiel ($\theta$) afin de constituer une jonction d'un système coulissant secondaire qui opère dans un second mode de fonctionnement occasionnel.

2 - Accouplement selon la revendication 1, caractérisé en ce que les profils complémentaires (112 et 122, 132), d'une part, de l'élément femelle (11) et d'autre part des éléments mâle (12) et intercalaire (13), respectivement, sont des cannelures constituées d'une succession de creux (1120) et de dents (1220).

3 - Accouplement selon l'une quelconque des revendications 1 et 2, caractérisé en ce que les géométries (124) et (134) qui coopèrent de l'élément mâle (12) et de l'élément intercalaire (13) sont constituées par un alésage (1130) de l'élément mâle (12) avec au moins un redan fait de facettes (1231) en dièdre et d'une queue (1330) de l'élément intercalaire (13) qui présente au moins un méplat (1331) de maière à autoriser un jeu circonférentiel donné ($\theta$) par contact de l'une ou l'autre des facettes (1231) avec le méplat (1331).

4 - Accouplement selon l'une quelconque des revendications 1 à 3, caractérisé en ce qu'il comprend un orienteur (14) destiné à faciliter l'engagement de l'élément mâle (12) dans l'élément femelle (11) qui est fait d'un bec (1221) avec chanfrein (1222) prolongeant une dent (1220) de l'élément mâle (12) et d'au moins un creux élargi (1121) dont la valeur angulaire de l'arc ($\varphi$) εστ αυ μοινσ 'γαλε αυ φευ χιρχονφ'ρεντιελ δονν' ($\theta$).

5 - Accouplement selon l'une quelconque des revendications 1 à 4, caractérisé en ce qu'il comprend un arrêtoir (15) pour empêcher l'élément femelle (11) et l'élément intercalaire (13) de se désolidariser qui est fait notamment d'une butée (151) portée par l'élément femelle (11).

6 - Accouplement selon la revendication 5, caractérisé en ce que la butée (151) comprend un jonc (1510) élastique avec un doigt (1511), une gorge (1152) périphérique ménagée dans l'élément femelle (11) et transpercée d'un trou (1153) radial destinés à recevoir ce jonc et ce doigt (1511) respectivement et en ce que la rainure (153) est creusée dans un bec (1221) et s'étend axialement à la périphérie.

7 - Accouplement selon l'une quelconque des revendications 1 à 6, caractérisé en ce qu'il comprend un joint (20) escamotable pour assurer l'étanchéité entre l'élément femelle (11) et l'élément mâle (12) et qui est constitué d'une gaine (21) avec un bout (211) fixé à l'extérieur de l'élément femelle (11) ainsi qu'avec un rétreint (212) annulaire conique, d'un fourreau (22) logé au moins partiellement entre l'élément femelle (11) et la gaine (21) avec à une extrémité une couronne (221) extérieure et au voisinage de l'autre extrémité au moins une patte (223) radiale centripète et au moins une languette (224) axiale élastique avec une rampe (2240) terminale, d'une garniture (23) creuse logée au moins partiellement entre l'élément mâle (12) et le fourreau (22) et qui présente un appui (231) et un flanc (232), et d'un ressort (24) logé entre l'élément mâle (12) et le fourreau (22) pour reposer, d'une part, contre l'appui (231) et, d'autre part, contre la patte (223), et en ce que ce joint est monté de manière que le fourreau (22) puisse coulisser axialement entre l'élément femelle (11) et la gaine (21) entre une position escamotée lorsque l'accouplement est dans son premier mode de fonctionnement normal et une position déployée lorsque l'accouplement est dans son second mode de fonctionnement occasionnel, de manière que le retreint (212) coopère avec la rampe (2240) de la languette (224) pour permettre le passage de l'une à l'autre des positions escamotée et déployée, et de manière que la garniture (23) puisse coulisser axialement sur l'élément mâle (12), le ressort (24) tendant à l'éloigner de la patte (223) afin de l'appliquer contre la tranche (110) de l'élément femelle (11).

8 - Accouplement selon l'une quelconque des revendications 1 à 7, caractérisé en ce qu'il comprend une sécurité (30) pour assurer la continuité de la transmission d'une rotation entre l'élément femelle (11) et l'élément mâle (12) en cas de défaillance de la liaison assurée par les profils complémentaires (112) et (122) et caractérisé en ce que cette liaison comprend un frein (31) interposé entre l'élément femelle (11) et l'élément intercalaire (13) pour normalement retenir l'élément intercalaire (13) dans l'élément femelle (11) dans la position gui correspond au mode de fonctionnement normal de l'accouplement.

9 - Accouplement selon la revendication 8, caractérisé en ce que le frein (31) comprend un patin (311) et au moins un disque (312) fixé sur l'élément intercalaire (13) de manière que le patin (311) porte sur la paroi intérieure (111) de l'élément femelle (11).

10 - Application de l'accouplement selon l'une quelconque des revendications 1 à 9 à une direction d'automobile.

# FIG.1

# FIG.3

FIG.2a

FIG.2b

FIG.2c

FIG.4a

FIG.4b

FIG.4c

EP 0 487 406 A1

FIG. 5

FIG.6a

FIG.6b

FIG.6c

**Office européen des brevets**

# RAPPORT DE RECHERCHE EUROPEENNE

Numero de la demande

EP 91 40 3113

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-2 330 642 (INTERNATIONAL HARVESTER)<br>* revendications; figures *<br>--- | 1 | B62D1/18<br>B62D33/06<br>F16C3/03<br>F16D3/06 |
| A | DE-A-2 400 811 (KLOCKNER-HUMBOLDT-DEUTZ)<br>* revendications; figures *<br>--- | 1 | |
| A | US-A-2 598 780 (GARNIER)<br>--- | | |
| A | US-A-2 937 881 (NORRIE) | | |
| | ----- | | |
| | | | **DOMAINES TECHNIQUES RECHERCHES (Int. Cl.5 )**<br><br>B62D<br>F16C<br>F16D<br>F16B |

Le présent rapport a été établi pour toutes les revendications

| Lieu de la recherche | Date d'achèvement de la recherche | Examinateur |
|---|---|---|
| LA HAYE | 17 FEVRIER 1992 | PIRIOU |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P0402)